# EUROPEAN PATENT SPECIFICATION

(11) **EP 1 484 846 B1**
(45) Date of publication and mention of the grant of the patent: **26.11.2008**
(21) Application number: 04012326.7
(22) Date of filing: 25.05.2004
(51) Int. Cl.: H04B 7/005

(54) **Power control method and power control circuit**
Verfahren und Vorrichtung zur Sendeleistungsregelung
Procédé et appareil de contrôle de puissance

(30) Priority: 03.06.2003 JP 2003158173
(43) Date of publication of application: 08.12.2004
(73) Proprietor: NEC CORPORATION, Tokyo (JP)
(72) Inventor: Tamura, Koichi, Minato-ku Tokyo (JP)
(74) Representative: Glawe, Delfs, Moll

(56) References cited:
- EP-A- 1 213 850
- US-B1- 6 545 986
- BAKER M P J ET AL: "POWER CONTROL IN UMTS RELEASE '99" INTERNATIONAL CONFERENCE ON 3G MOBILE COMMUNICATION TECHNOLOGIES, XX, XX, no. 471, 1999, pages 36-40, XP000900538
- "Universal Mobile Telecommunications System (UMTS); Physical layer procedures (FDD) (3GPP TS 25.214 version 5.4.0 Release 5); ETSI TS 125 214" ETSI STANDARDS, EUROPEAN TELECOMMUNICATIONS STANDARDS INSTITUTE, SOPHIA-ANTIPO, FR, vol. 3-R1, no. V540, March 2003 (2003-03), XP014008413 ISSN: 0000-0001

## Description

### BACKGROUND OF THE INVENTION

The present invention relates to a power control method suitable for controlling transmission power in radio communication conducted in a communication environment susceptible to a change, such as mobile communication, and a power control circuit for executing the method.

As a conventional method for maintaining a proper communication quality in a mobile communication system, outer loop power control, which increases and decreases a power level of a transmission signal, is known. As a technique of this kind, for example, there is a technique described in Japanese Patent Publication No. 2003-32184 A (page 3, FIG. 1). According to this technique, in outer loop power control at the CDMA (Code Division Multiple Access) communication system, a power level of a signal is controlled by correcting a target value of an SIR (Signal to Interference Ratio) on the basis of a bit error rate (BER) of a received signal.

In the conventional- outer loop control, however, determination of the power level is conducted on the basis of a single error rate. For example, when the error rate has abruptly increased because of a change in the communication environment, therefore, the power is increased in response to the increase even if the increase in error rate is temporary. As a result, the possibility that another signal will be subject to interference increases because of an influence of the signal transmitted with the high power. On the contrary, if the transmission power is decreased in response to a temporary decrease in error rate, there is a fear that the transmission quality will be degraded. In this way, the conventional technique has a problem that drawbacks described above are caused by immediately coping with a change in communication environment.

US-A-6 545 986 discloses a power control method for a base station in a CDMA-system. In this method an average frame error rate is determined and compared to a target value, and the transmission power of the base station is controlled depending on the comparison result.

Baker M P J ET AL: "Power Control in UMTS Release '99" International Conference on 3G Mobile Communication Technologies, no. 471, 1999, pages 36-40, discloses the power control of a mobile terminal by a base station, wherein the base station either sends one command or a number of commands to change the power of the mobile terminal.

### SUMMARY OF THE INVENTION

The present invention has been achieved in order to solve the above-described problems. An object of the present invention is to provide a power control method, and power control circuit, that conducts proper outer loop power control with due regard to a change in communication quality.

This object is achieved by a power control method according to claim 1 and by a power control circuit according to claim 7; the dependent claims are related to further developments of the invention.

### BRIEF DESCRIPTION OF THE DRAWINGS

FIG. 1 is a block diagram showing a configuration of a first embodiment of a power control circuit according to the present invention;
FIG. 2 is a flow chart showing an operation of a power control circuit of a first embodiment according to the present invention;
FIG. 3 is a first diagram showing history of a BLER in a first embodiment according to the present invention;
FIG. 4 is a second diagram showing history of a BLER in a first embodiment according to the present invention;
FIG. 5 is a third diagram showing history of a BLER in a first embodiment according to the present invention;
FIG. 6 is a fourth diagram showing history of a BLER in a first embodiment according to the present invention;
FIG. 7 is a block diagram showing a configuration of a second embodiment of a power control circuit according to the present invention;
FIG. 8 is a first diagram showing a block control example of a power control circuit in a second embodiment according to the present invention; and
FIG. 9 is a second diagram showing a block control example of a power control circuit in a second embodiment according to the present invention.

### DESCRIPTION OF THE PREFERRED EMBODIMENTS

Hereafter, embodiments of the present invention will be described in detail with reference to the drawings.

### <First Embodiment>

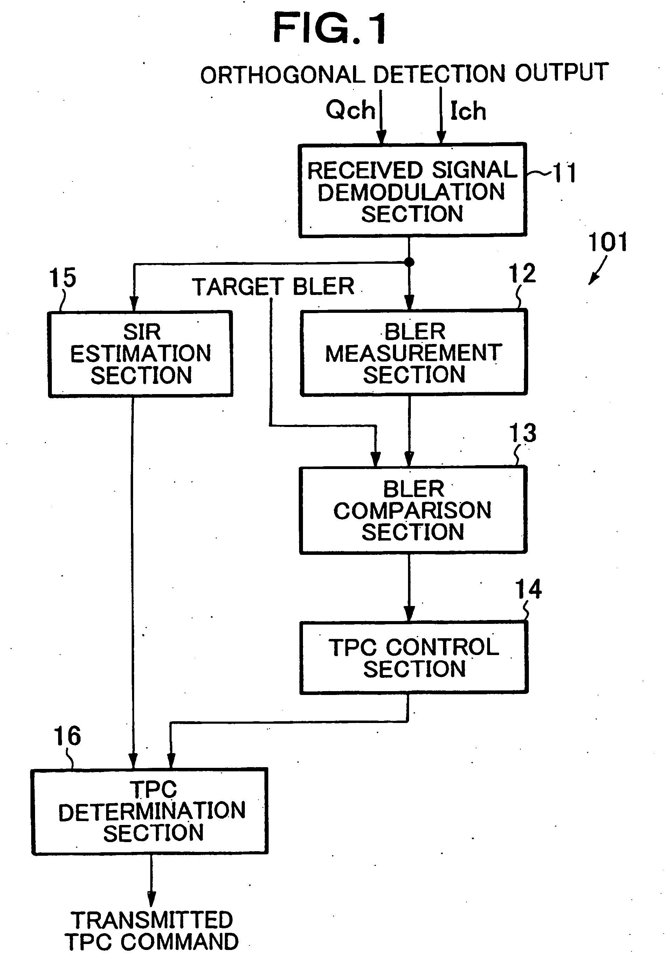

FIG. 1 is a block diagram showing a first embodiment of a power control circuit for executing a power control method according to the present invention. A power control circuit 101 in the first embodiment is provided in a reception side apparatus for receiving a signal transmitted in radio communication of the CDMA system. The power control circuit 101 exercises outer loop power control for giving an order concerning signal transmission power to a transmission side apparatus. A code block transmitted between the reception side apparatus and the transmission side apparatus indicates a unit that forms one error correction word.

As shown in FIG. 1, the power control circuit 101 includes a received signal demodulation section 11 for conducting typical demodulation processing such as despreading processing and error correction processing on an I component and a Q component obtained by conducting orthogonal detection on a received signal, a BLER measurement section 12 for making a decision on a CRC (Cyclic Redundancy Check) bit of each code block demodulated by the demodulation section 11, measuring a block error rate (hereafter abbreviated to BLER) of each block, and obtaining an average BLER from a predetermined number of successively measured BLERs, a BLER comparison section 13 for obtaining a difference between the average BLER and a preset target BLER, a TPC (Transmit Power Control) section 14 serving as a quality decision section for judging a communication quality of radio communication on the basis of history of the difference obtained by the BLER comparison section 13 over each predetermined interval, an SIR estimation section 15 for estimating an SIR on the basis of a signal output from the received signal demodulation section 11, and a TPC determining section 16 serving as a power control determining section for determining contents of a power control order to be supplied to the transmission side apparatus on the basis of a result of the quality judgment conducted by the TPC control section 14.

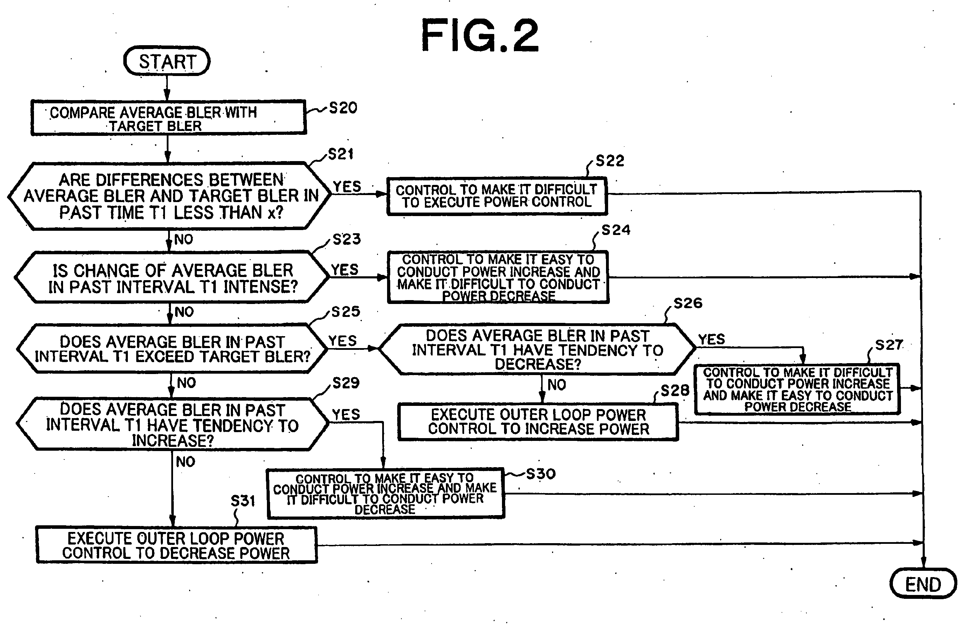

Operation of the power control circuit 101 will now be described with reference to a flow chart shown in FIG. 2. First, code blocks obtained by demodulation processing in the received signal demodulation section 11 are successively supplied to the BLER measurement section 12. The BLER measurement section 12 measures a BLER every block, and then obtains an average BLER concerning a plurality of code blocks. The BLER comparison section 13 compares the average BLER with the target BLER and obtains a difference between them (step S20).

The TPC control section 14 judges a communication quality every predetermined interval T1 on the basis of history of the difference obtained by the BLER comparison section 13 over each predetermined interval. A result of this decision is applied to power control described later until the interval T1 elapses. The predetermined interval T1 can be made, for example, equal to an interval over which a predetermined number of average BLERs are calculated. The TPC control section 14 refers to history of the difference, and judges the communication quality on the basis of whether a predetermined number of recorded differences is less than a preset allowable value x (step S21). When the predetermined number of differences is less than the allowable value x (YES at the step S21), the TPC control section 14 judges that the communication quality is proper and stable, and notifies the TPC determination section 16 to that effect.

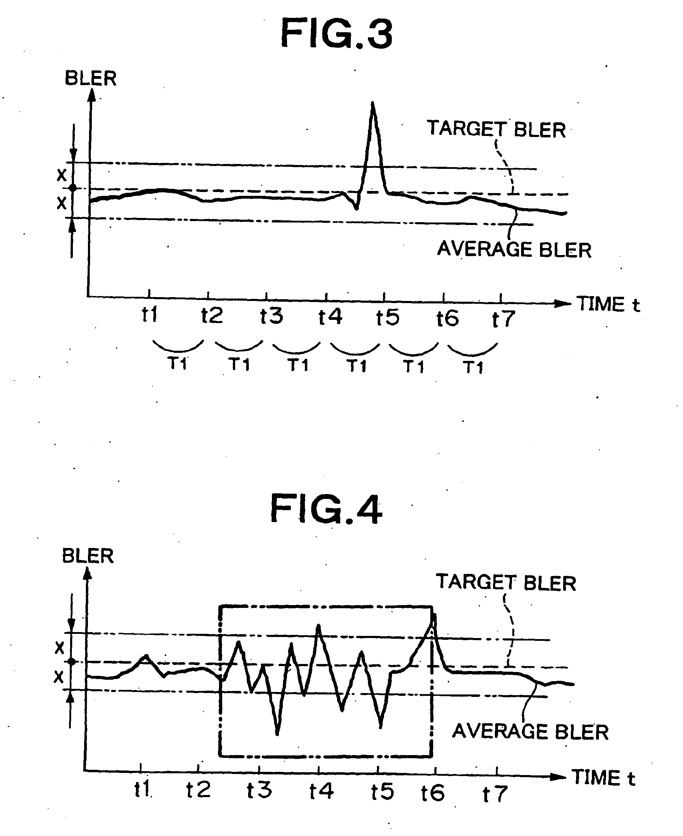

As an example of the judgment, it is supposed that differences at three past points in time are referred to, and history of the BLER as shown in FIG. 3 has been obtained. In the example shown in FIG. 3, the average BLER approximates to the target value between time t1 and t4 and between time t6 and t7. At time t5, however, the communication quality is temporarily degraded by a change or the like in communication environment, and the difference exceeds x. As the quality judgment at the point t5 in time, the TPC control section 14 judges the communication quality to be stable, because all differences at past points t2 to t4 in time are less than x although the difference at the point t5 in time exceeds the allowable value x.

Upon receiving the result of the judgment conducted by the TPC control section 14, the TPC determination section 16 orders the transmission side apparatus to suppress the increase or decrease in transmission power in order to maintain the transmission power in the present state (step S22). This order is given by using a TPC command. For example, a command for stopping the power increase or decrease or a command for causing the power increase and decrease at the same frequencies is transmitted. As a result, the power level in the present state is maintained, and in addition, it is possible to prevent unnecessary power increase caused in response to temporary quality degradation.

When a predetermined number of differences in the history are the allowable value x or more (NO at the step S21), the TPC control section 14 determines whether transition of the average BLER in the pertinent interval is intense (step S23). For example, paying attention to time t6 in history as shown in FIG. 4, it is judged that the change of the average BLER is intense between past points t3 and t5. As for a criterion for the judgment, for example, it is judged that the change is intense when three or more peaks exceeding the allowable value x have been ascertained in the transition of the average BLER. In this way, the judgment criterion can be set suitably. When the change of the average BLER is thus intense (YES at the step S23), it is judged that the communication quality is unstable and there is a possibility that fatal quality degradation will be caused. Upon receiving the judgment result, the TPC determination section 16 issues an order for suppressing the power decrease, i.e., an order for facilitating power increase and making power decrease difficult, in order to avoid fatal quality degradation (step S24).

Typically, which of the single TPC command and a plurality of TPC commands is to be used to control power increase and decrease is set between the reception side apparatus and the transmission side apparatus. "Exercising power control by using a single command" means that an order according to the command is executed each time the transmission side apparatus receives a command from the reception side apparatus. "Exercising power control by using a plurality of commands" means that, for example, when a command having the same order contents has been received a predetermined number of times the order is first executed, i.e., commands of the same kind are thinned.

It is now supposed that the reception side apparatus is to make it easy for the transmission side apparatus to conduct power increase or decrease in the embodiment of the present invention. For example, if the control using a plurality of TPC commands is set, then the reception side apparatus orders the transmission side apparatus to change it to the control using a single command and conduct power increase or decrease under this setting. If the control using a single command is already conducted, then the reception side apparatus orders the transmission side apparatus to increase the control width at the time of power increase or decrease as compared with that in the present state.

On the contrary, it is now supposed that the reception side apparatus is to make it difficult for the transmission side apparatus to conduct power increase or decrease. For example, if the control using a single TPC command is set, then the reception side apparatus orders the transmission side apparatus to change it to the control using a plurality of commands. If the control using a plurality of commands is already conducted, then the reception side apparatus orders the transmission side apparatus to decrease the control width at the time of power increase or decrease as compared with that in the present state. Or the reception side apparatus orders the transmission side apparatus to insert a command for ordering the increase and a command for ordering the decrease before and after a command to be suppressed in execution, at the same frequencies.

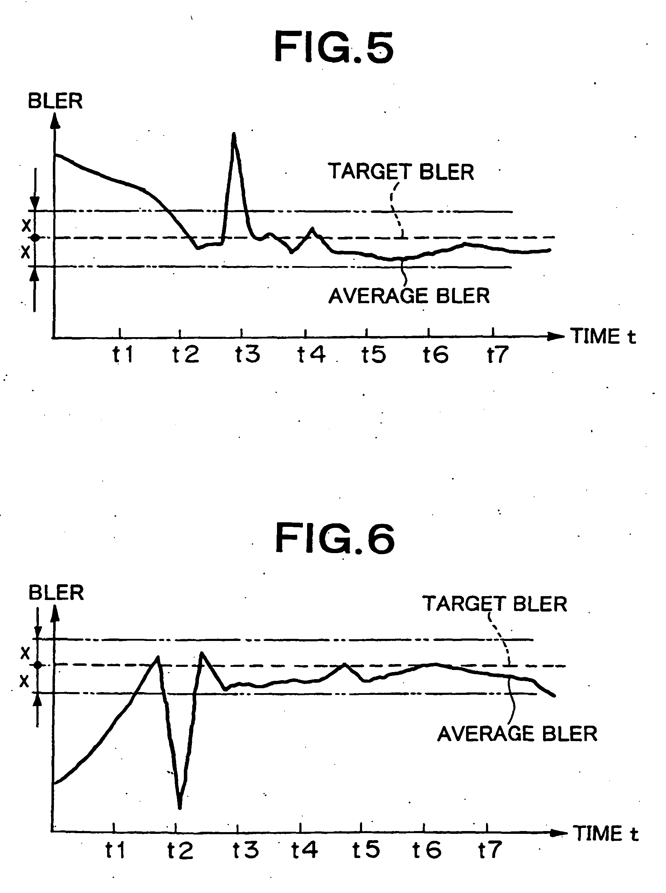

If the TPC control section 14 judges that the past average BLER is not intense in change (NO at the step S23) and the past average BLER exceeds the target BLER (YES at the step S25), then the TPC control section 14 determines whether the average BLER in the pertinent interval tends to decrease (step S26). For example, observing the transition of the average BLER between time t1 and time t4 in history shown in FIG. 5, the average BLER first exceeds the target value, but tends to fall toward time t4 (YES at the step S26). In such a case, the TPC control section 14 judges that the communication quality has a tendency to be improved at the time t4. Upon being notified to that effect, the TPC determination section 16 issues an order for suppressing the power increase; i.e., an order for making the power increase difficult and making the power decrease easy (step S27). Or the TPC determination section 16 may issue an order for suppressing the power increase and decrease in order to maintain the power level in the present state.

If the average BLER is not decreased even when the time t4 is arrived at and the communication quality is judged to have no tendency to be improved, then the TPC determination section 16 regards the degradation as fatal quality degradation, and issues an order similar to a power increase order using the conventional outer loop power control. In other words, the TPC determination section 16 orders the transmission side apparatus to conduct the power increase and not to conduct the power decrease (step S28).

If the past average BLER is gentle in change and it does not exceed the target value (NO at the step S25), but the average BLER has a tendency to increase in the pertinent interval (YES at step S29), then the TPC determination section 16 judges that there is a possibility that the communication quality will be brought to fatal degradation. For example, in history shown in FIG. 6, the increase tendency of the average BLER is seen between time t2 and t4. In order to prevent fatal degradation of the communication quality, therefore, the TPC determination section 16 orders the transmission side apparatus to make it easy to increase power and make it difficult to decrease power (step S30). Or the TPC determination section 16 may issue an order for suppressing the power increase and decrease in order to maintain the power level in the present state.

If the past average BLER is judged to have no tendency to increase (NO at the step S29), then the TPC determination section 16 judges that the communication environment is extremely good and the transmission power at a level in the present state is excessive in the environment, and issues an order similar to a power decrease order using the conventional outer loop power control not to conduct the power increase and to conduct the power decrease (step S31).

When determining contents of the order issued to the transmission side apparatus, the TPC determining section 16 refers to the SIR estimated by the SIR estimation section 15, and recognizes the transmission power level in the present state. As a result, the TPC determining section 16 is prevented from ordering the transmission side apparatus to increase or decrease power in excess of a predetermined upper limit value or lower limit value concerning the transmission power.

According to the power control circuit 101 of the first embodiment, power control is exercised according to the communication quality judged on the basis of the history concerning the average BLER. Therefore, it is possible to conduct proper outer loop power control with due regard to history of the change in the communication environment without being affected by a temporary change of the average BLER.

### <Second Embodiment>

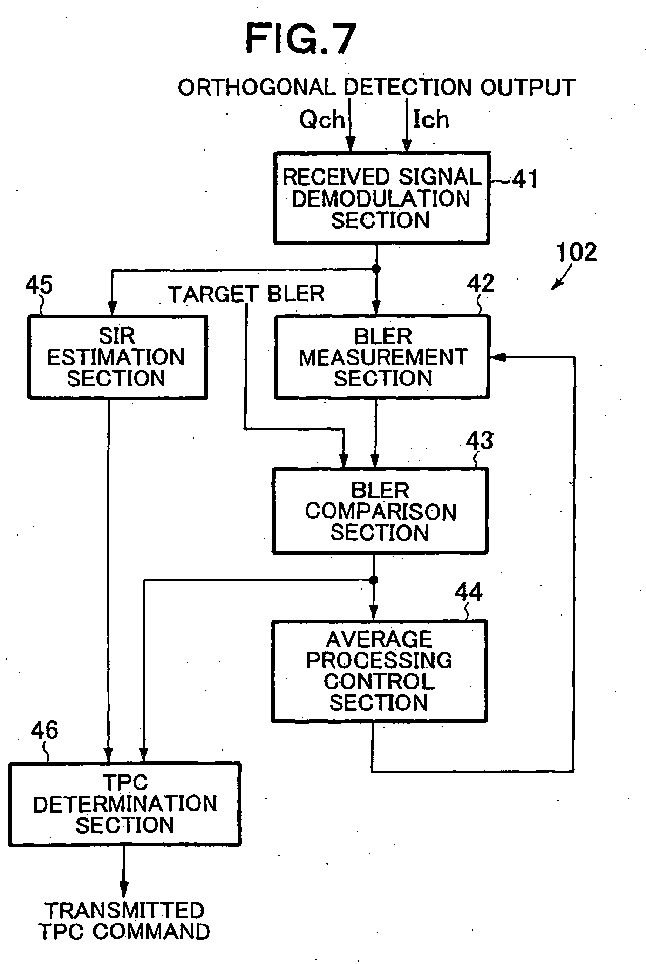

FIG. 7 is a block diagram showing a second embodiment of a power control circuit for executing a power control method according to the present invention. As shown in FIG. 7, a power control circuit 102 of the second embodiment includes a received signal demodulation section 41, a BLER measurement section 42, a BLER comparison section 43 and an SIR estimation section 45, which perform functions respectively similar to those of the received signal demodulation section 11, the BLER measurement section 12, the BLER comparison section 13 and the SIR estimation section 15 included in the power control circuit 101 of the first embodiment. The power control circuit 102 includes an average processing control section 44 for exercising control concerning the average BLER described later to the BLER measurement section 42.

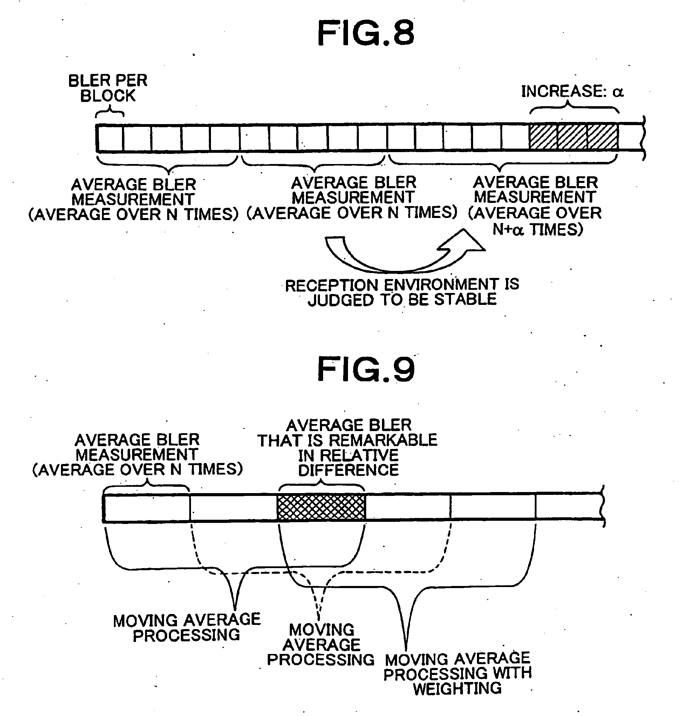

The average processing control section 44 judges the communication quality on the basis of history concerning the average BLER along a procedure similar to the procedure of the TPC control section 14 of the first embodiment. When the average processing control section 44 has judged the communication quality, the average processing control section 44 issues an order for increasing or decreasing an interval concerning the average BLER, i.e., the quantity of code blocks concerning the calculation of one average BLER to the BLER measurement section 42 on the basis of a result of the judgment. For example, it is now supposed that the average processing control section 44 has judged that the communication quality is good when calculating the average BLER from N blocks, as shown in FIG. 8. At the time of calculation of the next average BLER, the average processing control section 44 orders the BLER measurement section 42 to increase the number of blocks by α and calculate the average BLER by using (N+α) blocks. In this way, the quantity of blocks is increased when the communication quality is good. Even if a high level BLER temporarily occurs, therefore, the influence of the high level BLER exerted on the result of the average BLER can be mitigated. As a result, power control with due regard to a temporary change of the communication quality can be exercised. If the average processing control section 44 judged the communication quality to be degraded, then the average processing control section 44 orders the BLER measurement section 42 to decrease the number of code blocks as compared with the number in the present state. By decreasing the number of blocks, the judgment subject of the communication quality can be sampled densely as compared with the present state. As a result, the monitoring of the communication quality is strengthened and further degradation of the quality can be prevented.

In the power control circuit 102, a difference between the target BLER and the average BLER obtained under the control of the average processing control section 44 is supplied from the BLER comparison section 43 to the TPC determination section 46. On the basis of the supplied difference, the TPC determination section 46 issues a power increase or decrease order to the transmission side apparatus. For example, if the average BLER is greater than the target BLER, then the TPC determination section 46 issues a power increase order in order to improve the degradation of the communication quality. If the average BLER is less than the target BLER, then the communication environment is good, and consequently the TPC determination section 46 issues a power decrease order in order to save the power.

As another control method concerning the average processing executed by the average processing control section 44, a procedure described hereafter can be adopted. This procedure is premised on that the BLER measurement section 42 calculates a moving average BLER from average BLERs obtained successively every predetermined number of code blocks, by using moving average processing and the BLER comparison section 43 obtains a difference between the moving average BLER and the target BLER. In this case, as shown in FIG. 9, the average processing control section 44 detects an average BLER that becomes remarkable in difference from its preceding or subsequent average BLER because of a temporary change or the like of the communication environment. And the average processing control section 44 orders the BLER measurement section 42 to provide the average BLER with a weight so as to reduce the difference from the its preceding or subsequent average BLER when conducting the moving average processing containing the detected average BLER. For example, if the detected average BLER has a value that is extremely higher than its preceding or subsequent value, the detected average BLER is provided with a weight for decreasing it as compared with its actual value. If the detected average BLER has a value that is extremely lower than its preceding or subsequent value, the detected average BLER is provided with a weight for increasing it as compared with its actual value. As a result, influence of an average BLER that is remarkable in difference from its preceding or subsequent value is mitigated at the time of the moving average processing. Power control with due regard to a temporary change of the communication quality can thus be conducted.

According to the power control method of the present invention, the reception side apparatus conducts power control on the basis of history concerning the code block error rate. Therefore, it is possible to conduct proper outer loop power control with due regard to the change of the communication environment, without conducting improper power control in response to a temporary change of the error rate.

According to the first configuration of a power control circuit of the present invention, the power control determination section determines. contents of control exercised on the transmission side apparatus on the basis of a result of judgment conducted by the quality control section, which judges the communication quality on the basis of history concerning the code block error rate. Therefore, it is possible to prevent improper power increase or decrease responsive to- a temporary change of the error rate.

According to the second configuration of a power control circuit of the present invention, the average processing control section increases or decreases the interval concerning average processing according to a communication quality judged on the basis of the history concerning the error rate. Therefore, it is possible to mitigate the influence of a temporary quality change in judgment of the communication quality. As a result, effects similar to those of the first configuration can be brought about.

## Claims

1. A power control method of sending an order concerning signal transmission power to a transmission side apparatus which transmits a signal from a reception side apparatus which receives the signal transmitted by taking a code block unit, the method comprises the steps of:
obtaining a difference between an average error rate of block error rates concerning a plurality of code blocks received from the transmission side apparatus and a preset target error rate by the reception side apparatus, and
sending an order concerning the transmission power to the transmission side apparatus on the basis of history of the difference obtained every predetermined interval,
wherein contents of the order is determined on the basis of a result of comparison between a predetermined number of differences in the history and an allowable value preset for differences,
wherein when the predetermined number of differences is greater than or equal to the allowable value and when predetermined changes exceeding an allowable value have been ascertained in the transition of the average error rate, the reception side apparatus orders the transmission side apparatus to change command control in order to make it easy to increase transmission power and make it difficult to decrease the transmission power.

2. The power control method according to claim 1, wherein
the reception side apparatus orders the transmission side apparatus to change command control in order to make it difficult to increase the transmission power and make it easy to decrease the transmission power, when the predetermined number of differences is greater than or equal to the allowable value, when predetermined changes exceeding an allowable value have not been ascertained in the transition of the average error rate, an average error rate corresponding to the predetermined number of differences is higher than the target error rate, and the average error rate decreases.

3. The power control method according to claim 1, wherein
the reception side apparatus orders the transmission side apparatus to suppress increase and decrease of transmission power, when the predetermined number of differences is greater than or equal to the allowable value, when predetermined changes exceeding an allowable value have not been ascertained in the transition of the average error rate, an average error rate corresponding to the predetermined number of differences is higher than the target error rate, and the average error rate decreases.

4. The power control method according to claim 1, wherein
the reception side apparatus orders the transmission side apparatus to change command control in order to make it easy to increase transmission power and make it difficult to decrease the transmission power, when the predetermined number of differences is greater than or equal to the allowable value, when predetermined changes exceeding an allowable value have not been ascertained in the transition of the average error rate of block error rates, an average error rate corresponding to the predetermined number of differences is lower than the target error rate, and the average error rate increases.

5. The power control method according to claim 2, wherein
the reception side apparatus orders the transmission side apparatus to suppress increase and decrease of transmission power, when the predetermined number of differences is greater than or equal to the allowable value, when predetermined changes exceeding an allowable value have not been ascertained in the transition of the average error rate of block error rates, an average error rate corresponding to the predetermined number of differences is lower than the target error rate, and the average error rate consecutively increases.

6. The power control method according to claim 1, wherein
the average error rate is a value obtained by conducting a moving average processing on each of error rate average values concerning a plurality of code blocks, and
an average value that has a difference exceeding the allowable value and that is included in the average values to be subject to the moving average processing is provided with a predetermined weight for decreasing the difference, followed by subjecting to the moving average processing.

7. A power control circuit comprising:
an error rate measurement section (12, 42) for measuring a block error rate of a signal transmitted by taking a code block unit, and obtaining an average error rate of block error rates concerning a plurality of code blocks;
an error rate comparison section (13, 43) for obtaining a difference between the average error rate and a preset target error rate;
a quality judgment section for judging a communication quality on the basis of history for a predetermined interval, of the difference obtained by the error rate comparison section; and
a power control determination section (16, 46) determining control contents of transmission power of the signal on the basis of a result of judgment conducted by the quality judgment section,
wherein the quality judgment section is adapted to determine the communication quality on the basis of a result of comparison between a predetermined number of differences in the history and an allowable value preset for differences, and notifies the power control determination section (16, 46) of a result of the judgment,
wherein when the predetermined number of differences is greater than or equal to the allowable value and when predetermined changes exceeding an allowable value have been ascertained in the transition of the average error rate, the quality judgment section is adapted to notify the power control determination section (16, 46) of a judgment result for changing command control in order to make it easy to increase transmission power and make it difficult to decrease the transmission power.

8. The power control circuit according to claim 7, wherein
the quality judgment section is adapted to notify the power control determination section (16, 46) of a judgment result for changing command control in order to make it difficult to increase transmission power and make it easy to decrease the transmission power, when the predetermined number of differences is greater than or equal to the allowable value, when predetermined changes exceeding an allowable value have not been ascertained in the transition of the average error rate of block error rates, an average error rate corresponding to the predetermined number of differences is higher than the target error rate, and the average error rate decreases.

9. The power control circuit according to claim 7, wherein
the quality judgment section is adapted to notify the power control determination section of a judgment result for exercising control in order to suppress the increase and decrease of transmission power, when the predetermined number of differences is greater than or equal to the allowable value, when predetermined changes exceeding an allowable value have not been ascertained in the transition of the average error rate of block error rates, an average error rate corresponding to the predetermined number of differences is higher than the target error rate, and the average error rate decreases.

10. The power control circuit according to claim 7, wherein
the quality judgment section is adapted to notify the power control determination section of a judgment result for changing command control in order to make it easy to increase transmission power and make it difficult to decrease the transmission power, when the predetermined number of differences is greater than or equal to the allowable value, when predetermined changes exceeding an allowable value have not been ascertained in the transition of the average error rate of block error rates, an average error rate corresponding to the predetermined number of differences is lower than the target error rate, and the average error rate consecutively increases.

11. The power control circuit according to claim 7, wherein
the quality judgment section is adapted to notify the power control determination section of a judgment result for exercising control in order to suppress increase and decrease of transmission power, when the predetermined number of differences is greater than or equal to the allowable value, when predetermined changes exceeding an allowable value have not been ascertained in the transition of the average error rate of block error rates, an average error rate corresponding to the predetermined number of differences is lower than the target error rate, and the average error rate consecutively increases.

12. The power control circuit according to claim 7, wherein
the error rate measurement section (12, 42) is adapted to obtain the average error rate by conducting a moving average processing on each of error rate average values concerning a plurality of code blocks, and
the quality judgment section is adapted to detect an average value that has a difference exceeding the allowable value and that is included in the average values to be subject to moving average processing, and orders the error rate measurement'section to provide the detected average value with a predetermined weight for decreasing the difference, followed by subjecting to the moving average processing.

## Patentansprüche

1. Leistungssteuerverfahren zum Senden eines Befehls bezüglich einer Signalsendeleistung an ein senderseitiges Gerät, das ein Signal von einem empfangsseitigen Gerät sendet, das das gesendete Signal durch Aufnehmen einer Codierblockeinheit empfängt, wobei das Verfahren die Schritte aufweist:
Erzielen einer Differenz zwischen einer mittleren Fehlerrate der Blockfehlerraten mit Bezug auf eine Anzahl von von dem senderseitigen Gerät empfangenen Codierblöcken und einer vorab gesetzten Zielfehlerrate durch das empfangsseitige Gerät, und
Senden eines Befehls bezüglich der Sendeleistung an das senderseitige Gerät basierend auf der Entwicklung der Differenzen, die jedes vorbestimmte Intervall erzielt werden,
wobei die Befehlsinhalte basierend auf dem Vergleichsergebnis zwischen einer vorbestimmten Anzahl von Differenzen in der Entwicklung und einem für die Differenzen vorab gesetzten zulässigen Wert bestimmt werden,
wobei, wenn die vorbestimmte Anzahl der Differenz größer als oder gleich dem zulässigen Wert ist und wenn vorbestimmte Änderungen, die einen zulässigen Wert überschreiten, im Übergang der mittleren Fehlerrate ermittelt worden sind, das empfangsseitige Gerät dem senderseitigen Gerät befiehlt, die Befehlssteuerung zu ändern, um die Erhöhung der Sendeleistung zu erleichtern und die Senkung der Sendeleistung zu erschweren.

2. Leistungssteuerverfahren nach Anspruch 1, wobei
das empfangsseitige Gerät dem senderseitigen Gerät befiehlt, die Befehlssteuerung zu ändern, um die Erhöhung der Sendeleistung zu erschweren und die Senkung der Sendeleistung zu erleichtern, wenn die vorbestimmte Anzahl der Differenzen größer als oder gleich dem zulässigen Wert ist, wenn vorbestimmte Änderungen, die einen zulässigen Wert überschreiten, im Übergang der mittleren Fehlerrate nicht ermittelt worden sind, eine mittlere Fehlerrate, die der vorbestimmten Anzahl von Differenzen entspricht, höher als die Zielfehlerrate ist und die mittlere Fehlerrate sinkt.

3. Leistungssteuerverfahren nach Anspruch 1, wobei
das empfangsseitige Gerät dem senderseitigen Gerät befiehlt, die Erhöhung und Senkung der Sendeleistung zu unterdrücken, wenn die vorbestimmte Anzahl der Differenzen größer als oder gleich dem zulässigen Wert ist, wenn vorbestimmte Änderungen, die einen zulässigen Wert überschreiten im Übergang der mittleren Fehlerrate nicht ermittelt worden sind, eine mittlere Fehlerrate entsprechend der vorbestimmten Anzahl von Differenzen höher als die Zielfehlerrate ist und die mittlere Fehlerrate sinkt.

4. Leistungssteuerverfahren nach Anspruch 1, wobei
das empfangsseitige Gerät dem senderseitigen Gerät befiehlt, die Befehlssteuerung zu ändern, um die Erhöhung der Sendeleistung zu erleichtern und die Senkung der Sendeleistung zu erschweren, wenn die vorbestimmte Anzahl der Differenzen größer als oder gleich dem zulässigen Wert ist, wenn vorbestimmte Änderungen, die einen zulässigen Wert überschreiten, im Übergang der mittleren Fehlerrate der Blockfehlerraten nicht ermittelt worden sind, eine mittlere Fehlerrate entsprechend der vorbestimmten Anzahl der Differenzen niedriger als die Zielfehlerrate ist und die mittlere Fehlerrate steigt.

5. Leistungssteuerverfahren nach Anspruch 2, wobei
das empfangsseitige Gerät dem senderseitigen Gerät befiehlt, die Erhöhung und Senkung der Sendeleistung zu unterdrücken, wenn die vorbestimmte Anzahl der Differenzen größer als oder gleich dem zulässigen Wert ist, wenn vorbestimmte Änderungen, die einen zulässigen Wert überschreiten im Übergang der mittleren Fehlerrate der Blockfehlerraten nicht ermittelt worden sind, eine mittlere Fehlerrate entsprechend der vorbestimmten Anzahl von Differenzen niedriger als die Zielfehlerrate ist und die mittlere Fehlerrate aufeinanderfolgend steigt.

6. Leistungssteuerverfahren nach Anspruch 1, wobei
die mittlere Fehlerrate ein Wert ist, der durch Durchführen einer gleitenden Mittelwertverarbeitung an jedem der Fehlerratenmittelwerte bezüglich einer Anzahl von Codierblöcken erzielt worden ist, und
ein Mittelwert, der eine Differenz aufweist, die den zulässigen Wert überschreitet, und der in den Mittelwerten enthalten ist, die der gleitenden Mittelwertverarbeitung unterzogen werden, mit einer vorbestimmten Gewichtung versehen wird, um die Differenz zu senken, gefolgt von der Unterziehung der gleitenden Mittelwertverarbeitung.

7. Leistungssteuerschaltung mit:
einem Fehlerratenmessabschnitt (12, 42) zum Messen einer Blockfehlerrate eines Signals, das durch Aufnehmen einer Codierblockeinheit gesendet wird, und Erzielen einer mittleren Fehlerrate der Blockfehlerraten bezüglich einer Anzahl von Codierblöcken;
einem Fehlerratenvergleichsabschnitt (13, 43), um zwischen der mittleren Fehlerrate und einer vorbestimmten Zielfehlerrate eine Differenz zu erzielen;
einem Qualitätsentscheidungsabschnitt, um eine Kommunikationsqualität auf der Basis der Entwicklung für ein vorbestimmtes Interval der Differenz, die durch den Fehlerratenvergleichsabschnitt erzielt worden ist, zu entscheiden; und
Leistungssteuerungsbestimmungsabschnitt (16, 46), um die Steuerinhalte der Sendeleistung des Signals auf der Basis des Ergebnisses der von dem Qualitätsentscheidungsabschnitt durchgeführten Entscheidung, zu bestimmen,
wobei der Qualitätsentscheidungsabschnitt so ausgebildet ist, dass er die Kommunikationsqualität auf der Basis des Ergebnisses des Vergleichs zwischen einer vorbestimmten Anzahl von Differenzen in der Entwicklung und einem zulässigen Wert, der für die Differenzen vorab gesetzt worden ist, bestimmt und ein Entscheidungsergebnis dem Leistungssteuerungsbestimmungsabschnitt (16, 46) meldet,
wobei, wenn die vorbestimmte Anzahl von Differenzen größer als oder gleich dem zulässigen Wert ist und wenn vorbestimmte Änderungen, die einen zulässigen Wert überschreiten, in dem Übergang der mittleren Fehlerrate ermittelt worden sind, der Qualitätentscheidungsabschnitt so ausgebildet ist, dass er dem Leistungssteuerungsbestimmungsabschnitt (16, 46) ein Entscheidungsergebnis zum Ändern der Befehlssteuerung meldet, um die Erhöhung der Sendeleistung zu erleichtern und die Senkung der Sendeleistung zu erschweren.

8. Leistungssteuerschaltung nach Anspruch 7, wobei
der Qualitätsentscheidungsabschnitt so ausgebildet ist, dass er dem Leistungssteuerungsbestimmungsabschnitt (16, 46) ein Entscheidungsergebnis zum Ändern der Befehlssteuerung meldet, um die Erhöhung der Sendeleistung zu erschweren und die Senkung der Sendeleistung zu erleichtern, wenn die vorbestimmte Anzahl der Differenzen größer als oder gleich dem zulässigen Wert ist, wenn vorbestimmte Änderungen, die einen zulässigen Wert überschreiten, in dem Übergang der mittleren Fehlerrate der Blockfehlerraten nicht ermittelt worden sind, eine mittlere Fehlerrate entsprechend der vorbestimmten Anzahl von Differenzen höher als die Zielfehlerrate ist und die mittlere Fehlerrate sinkt.

9. Leistungssteuerschaltung nach Anspruch 7, wobei
der Qualitätsentscheidungsabschnitt so ausgebildet ist, dass er dem Leistungssteuerungsbestimmungsabschnitt ein Entscheidungsergebnis zur Ausübung einer Steuerung zur Unterdrückung der Erhöhung und Senkung der Sendeleistung meldet, wenn die vorbestimmte Anzahl von Differenzen größer als oder gleich dem zulässigen Wert ist, wenn vorbestimmte Änderungen, die einen zulässigen Wert überschreiten, in den Übergang der mittleren Fehlerrate der Blockfehlerraten nicht ermittelt worden sind, eine mittlere Fehlerrate entsprechend einer vorbestimmten Anzahl von Differenzen höher als die Zielfehlerrate ist und die mittlere Fehlerrate sinkt.

10. Leistungssteuerschaltung nach Anspruch 7, wobei
der Qualitätsentscheidungsabschnitt so ausgebildet ist, dass er dem Leistungssteuerungsbestimmungsabschnitt ein Entscheidungsergebnis zum Ändern der Befehlssteuerung meldet, um die Erhöhung der Sendeleistung zu erleichtern und die Senkung der Sendeleistung zu erschweren, wenn die vorbestimmte Anzahl von Differenzen größer als oder gleich dem zulässigen Wert ist, wenn vorbestimmte Änderungen, die einen zulässigen Wert überschreiten, in dem Übergang der mittleren Fehlerrate der Blockfehlerraten nicht ermittelt worden sind, eine mittlere Fehlerrate entsprechend der vorbestimmten Anzahl von Differenzen niedriger als die Zielfehlerrate ist und die mittlere Fehlerrate aufeinanderfolgend steigt.

11. Leistungssteuerschaltung nach Anspruch 7, wobei
der Qualitätsentscheidungsabschnitt so ausgebildet ist, dass er dem Leistungssteuerungsbestimmungsabschnitt ein Entscheidungsergebnis zur Ausübung der Steuerung meldet, um die Erhöhung und Senkung der Sendeleistung zu unterdrücken, wenn die vorbestimmte Anzahl der Differenzen größer als oder gleich dem zulässigen Wert ist, wenn vorbestimmte Änderungen, die einen zulässigen Wert überschreiten, in dem Übergang der mittleren Fehlerrate der Blockfehlerraten nicht ermittelt worden sind, eine mittlere Fehlerrate entsprechend der vorbestimmten Anzahl von Differenzen niedriger als die Zielfehlerrate ist und die mittlere Fehlerrate aufeinanderfolgend steigt.

12. Leistungssteuerschaltung nach Anspruch 7, wobei
der Fehlerratenmessabschnitt (12, 42) so ausgebildet ist, dass er die mittlere Fehlerrate erzielt, indem er an jedem der Fehlerratenmittelwerte bezüglich einer Anzahl von Codierblöcken eine gleitende Mittelwertverarbeitung durchführt, und
der Qualitätsentscheidungsabschnitt so ausgebildet ist, dass er einen Mittelwert, welcher eine Differenz hat, die den zulässigen Wert überschreitet, und der in den Mittelwerten, die der gleitenden Mittelwertverarbeitung unterzogen werden enthalten ist, detektiert und dem Fehlerratenmessabschnitt befiehlt, den detektierten Mittelwert mit einer vorbestimmten Gewichtung zur Senkung der Differenz zu versehen, gefolgt von dem Unterziehen der gleitenden Mittelwertverarbeitung.

## Revendications

1. Procédé de contrôle de puissance pour envoyer un ordre concernant une puissance de transmission de signal à un appareil côté transmission qui transmet un signal depuis un appareil côté réception qui reçoit le signal transmis en prenant une unité de bloc de code, le procédé comprenant les étapes consistant à :
obtenir une différence entre un taux d'erreurs moyen de taux d'erreurs sur les blocs concernant une pluralité de blocs de code reçus depuis l'appareil côté transmission et un taux d'erreurs cible prédéfini par l'appareil côté réception, et
envoyer un ordre concernant la puissance de transmission à l'appareil côté transmission sur la base de l'historique de la différence obtenue à chaque intervalle prédéterminé,
dans lequel le contenu de l'ordre est déterminé sur la base d'un résultat de comparaison entre un nombre prédéterminé de différences dans l'historique et une valeur autorisable prédéfinie pour les différences,
où, lorsque le nombre prédéterminé de différences est supérieur ou égal à la valeur autorisable, et lorsque des changements prédéterminés dépassant une valeur autorisable ont été identifiés dans la transition du taux d'erreurs moyen, l'appareil côté réception ordonne à l'appareil côté transmission de changer un contrôle de commande de manière à rendre facile d'accroître la puissance de transmission et à rendre difficile de diminuer la puissance de transmission.

2. Procédé de contrôle de puissance selon la revendication 1, dans lequel :
l'appareil côté réception ordonne à l'appareil côté transmission de changer un contrôle de commande de manière à rendre difficile d'augmenter la puissance de transmission et de rendre facile de diminuer la puissance de transmission, lorsque le nombre prédéterminé de différences est supérieur ou égal à la valeur autorisable, lorsque des changements prédéterminés dépassant une valeur autorisable n'ont pas été identifiés dans la transition du taux d'erreurs moyen, un taux d'erreurs moyen correspondant au nombre prédéterminé de différences est supérieur au taux d'erreurs cible, et le taux d'erreurs moyen diminue.

3. Procédé de contrôle de puissance selon la revendication 1, dans lequel :
l'appareil côté réception ordonne à l'appareil côté transmission de supprimer l'augmentation et la diminution de la puissance de transmission, lorsque le nombre prédéterminé de différences est supérieur ou égal à la valeur autorisable, lorsque des changements prédéterminés dépassant une valeur autorisable n'ont pas été identifiés dans la transition du taux d'erreurs moyen, un taux d'erreurs moyen correspondant au nombre prédéterminé de différences est supérieur au taux d'erreurs cible, et le taux d'erreurs moyen diminue.

4. Procédé de contrôle de puissance selon la revendication 1, dans lequel :
l'appareil côté réception ordonne à l'appareil côté transmission de changer un contrôle de commande de manière à rendre facile d'augmenter la puissance de transmission et de rendre difficile de diminuer la puissance de transmission, lorsque le nombre prédéterminé de différences est supérieur ou égal à la valeur autorisable, lorsque des changements prédéterminés dépassant une valeur autorisable n'ont pas été identifiés dans la transition du taux d'erreurs moyen de taux d'erreurs sur les blocs, un taux d'erreurs moyen correspondant au nombre prédéterminé de différences est inférieur au taux d'erreurs cible, et le taux d'erreurs moyen augmente.

5. Procédé de contrôle de puissance selon la revendication 2, dans lequel :
l'appareil côté réception ordonne à l'appareil côté transmission de supprimer l'augmentation et la diminution de la puissance de transmission, lorsque le nombre prédéterminé de différences est supérieur ou égal à la valeur autorisable, lorsque des changements prédéterminés dépassant une valeur autorisable n'ont pas été identifiés dans la transition du taux d'erreurs moyen de taux d'erreurs sur les blocs, un taux d'erreurs moyen correspondant au nombre prédéterminé de différences est inférieur au taux d'erreurs cible, et le taux d'erreurs moyen augmente consécutivement.

6. Procédé de contrôle de puissance selon la revendication 1, dans lequel :
le taux d'erreurs moyen est une valeur obtenue en conduisant un traitement à moyenne mobile sur chacune des valeurs moyennes de taux concernant une pluralité de blocs de code, et
une valeur moyenne qui a une différence dépassant la valeur autorisable et qui est incluse dans les valeurs moyennes pour être soumise à un traitement à moyenne mobile se voit affecter une pondération prédéterminée pour diminuer la différence, étape suivie par la soumission au traitement à moyenne mobile.

7. Circuit de contrôle de puissance comprenant :
une section de mesure de taux d'erreurs (12, 42) pour mesurer un taux d'erreurs sur les blocs d'un signal transmis en prenant une unité de bloc de code, et obtenir un taux d'erreurs moyen de taux d'erreurs sur les blocs concernant une pluralité de blocs de code ;
une section de comparaison de taux d'erreurs (13, 43) pour obtenir une différence entre le taux d'erreurs moyen et un taux d'erreurs cible prédéfini ;
une section de jugement de qualité pour juger de la qualité d'une communication sur la base d'un historique pour un intervalle prédéterminé de la différence obtenue par la section de comparaison de taux d'erreurs ; et
une section de détermination de contrôle de puissance (16, 46) déterminant le contenu de contrôle de la puissance de transmission du signal sur la base d'un résultat de jugement conduit par la section de jugement de qualité,
où la section de jugement de qualité est adaptée pour déterminer la qualité de la communication sur la base d'un résultat de comparaison entre un nombre prédéterminé de différences dans l'historique et une valeur autorisable prédéfinie pour les différences, et notifie à la section de détermination de contrôle de puissance (16, 46) un résultat du jugement,
où, lorsque le nombre prédéterminé de différences est supérieur ou égal à la valeur autorisable et lorsque des changements prédéterminés dépassant une valeur autorisable ont été identifiés dans la transition du taux d'erreurs moyen, la section de jugement de qualité est adaptée pour notifier à la section de détermination de contrôle de puissance (16, 46) un résultat de jugement pour changer le contrôle de commande de manière à rendre facile d'augmenter la puissance de transmission et à rendre difficile de diminuer la puissance de transmission.

8. Circuit de contrôle de puissance selon la revendication 7, dans lequel :
la section de jugement de qualité est adaptée pour notifier à la section de détermination de contrôle de puissance (16, 46) un résultat de jugement pour changer un contrôle de commande de manière à rendre difficile d'augmenter la puissance de transmission et à rendre facile de diminuer la puissance de transmission, lorsque le nombre prédéterminé de différences est supérieur ou égal à la valeur autorisable, lorsque des changements prédéterminés dépassant une valeur autorisable n'ont pas été identifiés dans la transition du taux d'erreurs moyen de taux d'erreurs sur les blocs, un taux d'erreurs moyen correspondant au nombre prédéterminé de différences est supérieur au taux d'erreurs cible, et le taux d'erreurs moyen diminue.

9. Circuit de contrôle de puissance selon la revendication 7, dans lequel :
la section de jugement de qualité est adaptée pour notifier à la section de détermination de contrôle de puissance un résultat de jugement pour exercer un contrôle de manière à supprimer l'augmentation et la diminution de la puissance de transmission, lorsque le nombre prédéterminé de différences est supérieur ou égal à la valeur autorisable, lorsque des changements prédéterminés dépassant une valeur autorisable n'ont pas été identifiés dans la transition du taux d'erreurs moyen de taux d'erreurs sur les blocs, un taux d'erreurs moyen correspondant au nombre prédéterminé de différences est supérieur au taux d'erreurs cible, et le taux d'erreurs moyen diminue.

10. Circuit de contrôle de puissance selon la revendication 7, dans lequel :
la section de jugement de qualité est adaptée pour notifier à la section de détermination de contrôle de puissance un résultat de jugement pour changer un contrôle de commande de manière à rendre facile d'augmenter la puissance de transmission et à rendre difficile de diminuer la puissance de transmission, lorsque le nombre prédéterminé de différences est supérieur ou égal à la valeur autorisable, lorsque des changements prédéterminés dépassant une valeur autorisable n'ont pas été identifiés dans la transition du taux d'erreurs moyen de taux d'erreurs sur les blocs, un taux d'erreurs moyen correspondant au nombre prédéterminé de différences est inférieur au taux d'erreurs cible, et le taux d'erreurs moyen diminue consécutivement.

11. Circuit de contrôle de puissance selon la revendication 7, dans lequel :
la section de jugement de qualité est adaptée pour notifier à la section de détermination de contrôle de puissance un résultat de jugement pour exercer un contrôle de manière à supprimer une augmentation et une diminution de la puissance de transmission, lorsque le nombre prédéterminé de différences est supérieur ou égal à la valeur autorisable, lorsque des changements prédéterminés dépassant une valeur autorisable n'ont pas été identifiés dans la transition du taux d'erreurs moyen de taux d'erreurs sur les blocs, un taux d'erreurs moyen correspondant au nombre prédéterminé de différences est inférieur au taux d'erreurs cible, et le taux d'erreurs moyen augmente consécutivement.

12. Circuit de contrôle de puissance selon la revendication 7, dans lequel :
la section de mesure de taux d'erreurs (12, 42) est adaptée pour obtenir le taux d'erreurs moyen en conduisant un traitement à moyenne mobile sur chacune des valeurs moyennes de taux d'erreurs concernant une pluralité de blocs de code, et
la section de jugement de qualité est adaptée pour détecter une valeur moyenne qui a une différence dépassant la valeur autorisable et qui est incluse dans les valeurs moyennes pour être soumise à un traitement à moyenne mobile, et ordonne à la section de mesure de taux d'erreurs d'affecter à la valeur moyenne détectée une pondération prédéterminée pour diminuer la différence, étape suivie par la soumission au traitement à moyenne mobile.
